(19) Europäisches Patentamt
European Patent Office
Office européen des brevets

(11) **EP 2 421 131 A2**

(12) **EUROPEAN PATENT APPLICATION**

(43) Date of publication:
**22.02.2012 Bulletin 2012/08**

(51) Int Cl.:
**H02H 1/44** *(2007.01)*    **H03H 1/00** *(2006.01)*

(21) Application number: **11176985.7**

(22) Date of filing: **09.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.08.2010 JP 2010185450**

(71) Applicant: **Fuji Electric Co., Ltd.
Kawasaki-shi 210-9530 (JP)**

(72) Inventor: **Kaimi, Takashi
Kawasaki-shi 210-9530 (JP)**

(74) Representative: **MERH-IP
Matias Erny Reichl Hoffmann
Paul-Heyse-Strasse 29
80336 München (DE)**

(54) **Noise filter and an EMC filter using the same**

(57)    An object of the present invention is to provide a noise filter (3) that improves or adjust readily the attenuation characteristics of the filter.

Disclosed is a noise filter for suppressing conducted emission generated in a power conversion apparatus, the noise filter (3) comprising: a grounding capacitor circuit (5), an interphase capacitor circuit (4), and an impedance circuit (10) for adjusting attenuation characteristics of the noise filter and connected to at least one of the grounding capacitor circuit (5) and the interphase capacitor circuit (4).

Fig.1

EP 2 421 131 A2

**Description**

CROSS-REFERENCE TO RELATED APPLICATION

This application is based on, and claims priority to, Japanese Patent Application No. 2010-185450, filed on August 20, 2010, contents of which are incorporated herein by reference.

BACKGROUND OF THE INVENTION

1. Field of the Invention

The present invention relates to a noise filter that suppresses conducted emission generated in a power conversion apparatus, and to an EMC (electromagnetic compatibility) filter that uses such a noise filter.

2. Description of the Related Art

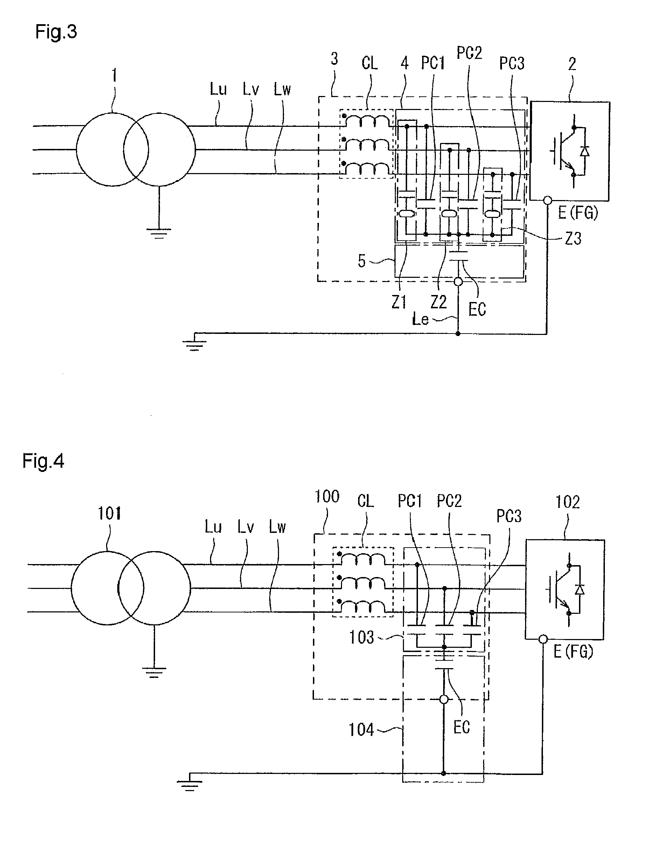

This type of noise filter has generally a construction as shown in Fig. 4. The noise filter 100 comprises: common mode reactors CLs inserted in power supply lines Lu, Lv, and Lw, respectively, between an AC power supply 101 and a power conversion apparatus 102; an interphase capacitor circuit 103 having interphase capacitors PC1, PC2, and PC 3 that are connected to the power supply lines Lu, Lv, and Lw, respectively, between the common mode reactors CLs and the power conversion apparatus 102 at respective ends of the interphase capacitors, and that are connected to each other at the other ends of the interphase capacitors; and a grounding capacitor circuit 104 having a grounding capacitor EC inserted between the interphase capacitor circuit 103 and the ground.
The noise filter 100 suppresses leakage out of noises towards the power supply side owing to a bypass formed with the interphase capacitors PC1, PC2, and PC3 and an increased impedance in the power supply side caused by the leakage inductance component of the common mode reactors CLs. The grounding capacitor EC and the inductance component of the common mode reactors CLs work as a bypass for a high frequency current that leaks out towards the power supply side through the power supply lines Lu, Lv, and Lw for supplying three-phase power.
In the noise filter 100 having a construction described above, since the capacitors do not work as capacitance components at frequencies higher than the self resonance frequency, the bypass effect decreases in that range of frequencies. Likewise, since the common mode reactors CLs do not work as inductance components at frequencies higher than the self resonance frequency, a high frequency current leaks out towards the power supply side at that range of frequencies.
In order to cope with this problem, Patent Document 1 discloses a construction of a noise filter for improving attenuation characteristic of noise components in a frequency band higher than the self resonance frequency of the common mode reactor, while maintaining a bypass for high frequency components. This noise filter comprises common mode reactors connected to the power supply lines between the AC power supply and a power conversion apparatus, and series circuits each having a pair of series-connected capacitor and reactor inserted between the power supply line for supplying three-phase voltage and the ground.
Patent Document 2 discloses another noise filter for attaining a noise reduction effect. This noise filter comprises common mode reactors connected to the power supply lines between the AC power supply and the power conversion apparatus, and pairs of parallel connected grounding capacitor and interphase capacitor, one of which has a large capacitance and the other has a small capacitance. The capacitor with a small capacitance works as a bypass for a high frequency current component in a several MHz frequency band or higher in which the capacitor with a large capacitance does not exhibit a capacitance function.
[Patent Document 1] Japanese Unexamined Patent Application Publication No. 2008-245037
[Patent Document 2] Japanese Unexamined Patent Application Publication No. 2007-236137

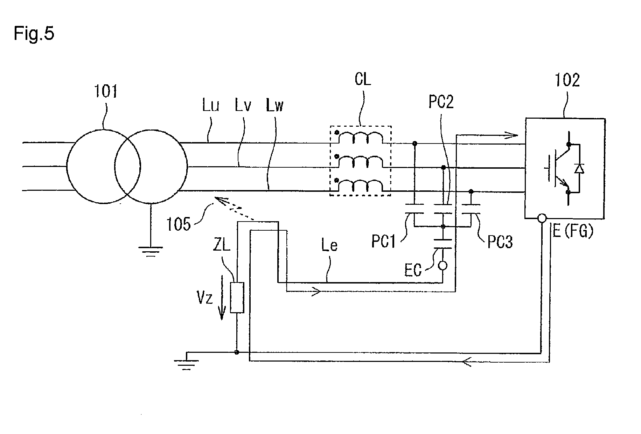

In the conventional examples disclosed in Patent Documents 1 and 2, although the attenuation characteristics can be adjusted by varying an inductance of the common mode reactor, and capacitances of the interphase capacitor and the grounding capacitor, the attenuation characteristic of the noise filter may be significantly degraded due to the length and the disposition of the path of the wiring in the interphase capacitor circuit 103 and the grounding capacitor circuit 104 composing the noise filter. In the case as shown in Fig. 5, in which the grounding line Le between the grounding capacitor EC and the ground is significantly long and a part of the grounding line Le is located in the vicinity of the AC power supply, a noise voltage Vz develops on the impedance ZL of the grounding line Le due to a noise current, to degrade the attenuation characteristic of the filter. In addition, since the grounding line Le is located in the vicinity of the AC power supply 101, noise induction 105 arises to degrade the attenuation characteristic of the filter. The problem of length and path of the grounding line Le is caused by the defect in the structure of the device, and thus, is a difficult problem to deal with after completion of the device.

When the attenuation characteristic of a conventional filter as shown in Fig. 4 is deteriorated due to the problem of wiring path in the interphase capacitor circuit 103 and the grounding capacitor circuit 104, the problem has conventionally been dealt with by enhancing constants of the common mode reactors, the interphase capacitors, and the grounding capacitor. However, because of a very large value of the required constants, an unsolved problem of high manufacturing costs remains.

Moreover, when a circuit component such as a connected power electronics device is changed, the attenuation characteristics are adjusted by selecting again the constants of the common mode reactors, the interphase capacitors, and the grounding capacitor, consuming a long time.

SUMMARY OF THE INVENTION

In view of the above-described unsolved problems in the conventional examples, it is an object of the present invention to provide a noise filter and an EMC filter using the filter in which the attenuation characteristics of the filter are readily improved or adjusted.

In order to accomplish the object, a noise filter according to a first aspect is a noise filter to suppress a conducted emission generated in a power conversion apparatus, the noise filter comprising an impedance circuit for adjusting attenuation characteristics of the filter connected to at least one of a grounding capacitor circuit and an interphase capacitor circuit composing the filter.

A noise filter with this construction adjusts the attenuation characteristics by means of impedance elements of an inductor, a capacitor, a resistor and the like connected in series or in parallel and included in the impedance circuit that is connected to at least one of the grounding capacitor circuit and the interphase capacitor circuit. The resistance component suppresses the noise current by increasing the impedance of the arranged path; the inductance component adjusts the frequency characteristics of the arranged path; and the capacitive component performs adjustment of frequency characteristics and impedance reduction of the arranged path. A magnetic core such as a ferrite core, when provided, suppresses the noise current and adjusts the frequency characteristics.

A noise filter according to a second aspect is the noise filter according to the first aspect, wherein the impedance circuit is preferably connected in series to at least one of the grounding capacitor circuit and the interphase capacitor circuit.

A noise filter with this construction adjusts the attenuation characteristics of the noise filter by means of impedance adjustment corresponding to the impedance elements included in the series-connected impedance circuit.

A noise filter according to the third aspect is the noise filter according to the first aspect, wherein the impedance circuit is connected in parallel to at least one of the grounding capacitor circuit and the interphase capacitor circuit.

A noise filter with this construction adjusts the attenuation characteristics of the noise filter by means of impedance adjustment corresponding to the impedance elements included in the parallel-connected impedance circuit.

An EMC filter according to another aspect of the invention uses the noise filter as stated in any one of the first to third aspects.

An EMC filter with this construction readily adjusts the attenuation characteristics of the EMC filter.

A noise filter according to the present invention comprises a grounding capacitor circuit, an interphase capacitor circuit, and an impedance circuit for adjusting the attenuation characteristics of the noise filter, the impedance circuit being connected to at least one of the grounding capacitor circuit and the interphase capacitor circuit. Consequently, the impedance circuit readily adjusts the attenuation characteristics of the noise filter by adjusting characteristics of at least one of the grounding capacitor circuit and the interphase capacitor circuit.

An EMC filter constructed using the noise filter that has the above-described effects readily adjusts the attenuation characteristics of the EMC filter.

BRIEF DESCRIPTION OF DRAWINGS

Fig. 1 is a circuit diagram of a noise filter of the first embodiment according to the present invention;

Fig. 2 is a circuit diagram of a noise filter of a variation from the first embodiment according to the present invention;

Fig. 3 is a circuit diagram of a noise filter of the second embodiment according to the present invention;

Fig. 4 is a circuit diagram of an example of conventional noise filter; and

Fig. 5 is a circuit diagram of another example of conventional noise filter.

[Description of Symbols]

| | |
|---|---|
| 1: | AC power supply |
| 2: | power electronics device |
| 3: | EMC filter |
| CL: | common mode reactor |
| 4: | interphase capacitor circuit |
| PC1, PC2, PC3 | interphase capacitor |
| 5: | grounding capacitor circuit |
| EC | grounding capacitor |
| Le | grounding line |
| 10: | impedance circuit |
| 11 | magnetic core |
| Cz | adjusting capacitor |
| Le2 | second grounding line |
| Z1, Z2, Z3 | impedance circuit |

DETAILED DESCRIPTION OF THE INVENTION

Some preferred embodiments of a noise filter according to the present invention are described in the following with reference to accompanying drawings.

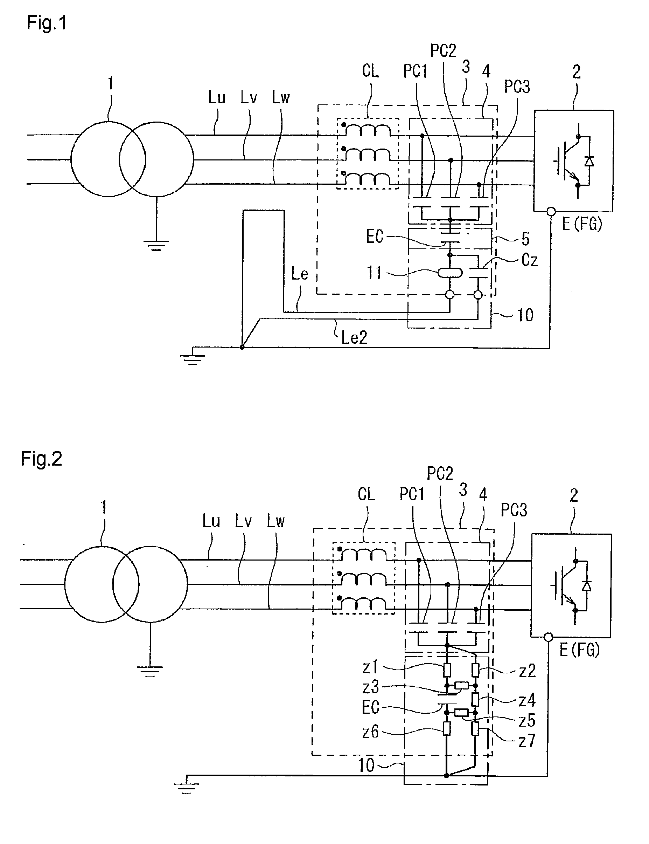

Fig. 1 shows the first embodiment according to the present invention applied to a power conversion apparatus.
Referring to Fig. 1, the reference numeral 1 represents an AC power supply that delivers three-phase AC power that is supplied, through power supply lines Lu, Lv, and Lw, to a power electronics device 2 of a power conversion apparatus including a converter, an inverter and the like having high frequency switching elements.
An EMC filter 3 is inserted in the power supply lines Lu, Lv, and Lw between the AC power supply 1 and the power electronics device 2. The EMC filter 3 comprises common mode reactors CLs inserted in the respective power supply lines Lu, Lv, and Lw, an interphase capacitor circuit 4, and a grounding capacitor circuit 5.
The interphase capacitor circuit 4 has interphase capacitors PC1, PC2, and PC3 connected to the respective power supply lines Lu, Lv, and Lw at one end of the respective interphase capacitors. The other ends of the interphase capacitors CP1, CP2, and CP3 are connected to each other.
The grounding capacitor circuit 5 has a grounding capacitor EC that is connected in series to the interphase capacitors PC1, PC2, and PC3 in the interphase capacitor circuit 4, and to the ground.
A grounding line Le in this embodiment is laid in a long path between the grounding capacitor EC in the grounding capacitor circuit 5 and the ground. In addition, a part of the grounding line Le is located in the vicinity of the AC power supply 1.
An impedance circuit 10 is connected to the grounding line Le in the vicinity of the grounding capacitor EC in the grounding capacitor circuit 5. The impedance circuit 10 comprises a magnetic core 11 composed of a ferrite core, for example, and an adjusting capacitor Cz. The magnetic core 11 is installed in the grounding line Le in the vicinity of the grounding capacitor EC, and the adjusting capacitor Cz is connected to the connection point of the magnetic core 11 and the grounding capacitor EC at one end of the adjusting capacitor Cz.

The other end of the adjusting capacitor Cz is connected to one end of a second grounding line Le2 that is arranged on a path different from that of the grounding line Le. The other end of the second grounding line Le2 is connected to the grounding line Le at a position in the vicinity of the grounded point of the grounding line Le to form a single common grounding point.

In operation of the first embodiment of the invention as described above, three-phase AC power is delivered from the AC power supply 1, through the power supply lines Lu, Lv, and Lw, to the power electronics device 2. A component of the power electronics device 2 for example, a converter converts the three-phase AC power to a DC power, which is delivered to an inverter, which in turn converts the DC power to an AC power and supplies the AC power to a load such as an electric motor to drive the load.

The inerter of the power electronics device 2 operates in a switching mode of switching elements such as six IGBTs, for example. The switching operation generates conducted emissions including common mode noise and normal mode noise, which appear on the power supply lines Lu, Lv, and Lw.
The conducted emissions are attenuated by an LC filter comprising the components of the EMC filter 3: the common mode reactors CLs, the interphase capacitors Pc1, PC2, and PC3, and the grounding capacitor EC.

When the grounding line Le from the grounding capacitor circuit 5 is laid in a long path as shown in Fig. 1, the attenuation characteristic of the noise filter degrades due to noise voltage on the impedance component of the grounding line Le that carries a noise current. When a part of the grounding line Le is located in the vicinity of the AC power supply 1 as depicted in Fig. 1, noise induction arises worsening the attenuation characteristic of the noise filter.
In order to cope with the degradation of the attenuation characteristic of the noise filter, analysis is made on the degradation conditions of the attenuation characteristics of the noise filter. Corresponding to the frequency region that requires improvement in the attenuation characteristic of the noise filter found from the analysis, setting of parameters is conducted on a characteristic of the magnetic core 11 and a capacitance of the adjusting capacitor Cz composing the impedance circuit 10.

The impedance circuit 10 connected to the grounding circuit 5 comprises the magnetic core 11 disposed in the grounding line Le and the adjusting capacitor Cz connected in parallel to the magnetic core 11. An impedance Zmc of the magnetic core 11 is represented by

$$Zmc = R + j\,X \quad \text{-------- (1)}$$

where R is a resistance component that consumes noise energy as a heat, j is the imaginary unit, and X is a reactance component that reflexes and attenuates the high frequency signal.

An impedance Zc of the adjusting capacitor Cz is represented by

$$Zc = 1\,/\,(j\omega C) \quad \text{-------- (2)}$$

where $\omega$ is an angular frequency and C is a capacitance of the adjusting capacitor Cz.
Consequently, a combined impedance Zs is represented by

$$Zs = (R + jX)\,/\,\{1 + j\omega C\,(R + jX)\} \quad \text{-------- (3)}$$

Therefore, the noise current is suppressed by the resistance component R of the magnetic core 11 that enhances an impedance of the grounding path. The reactance component X of the magnetic core 11 that reflexes and attenuates the high frequency signal on the noise adjusts the frequency characteristics. The capacitance component C of the adjusting capacitor Cz has the effects of adjustment of frequency characteristics and impedance reduction on the arranged path, and further, diverts the noise current, which causes noise induction, to the second grounding line Le2.

Therefore, attenuation characteristic of the noise filter is effectively improved by adding an impedance circuit 10 composed of an impedance Zc of the adjusting capacitor Cz and an appropriate impedance Zmc of the magnetic core 11.

Selection and magnitude of the resistance component R, the reactance component X, and the capacitance component C of the impedance circuit 10 must be optimized corresponding to the frequency region in which the attenuation characteristic needs to be improved.

If the reduction of noise induction is unnecessary, the second grounding line Le2 may be arranged in parallel and nearly to the grounding line Le without problem.

In the first embodiment as described above, in order to cope with degraded attenuation characteristic of the EMC filter 3, adjustment of the attenuation characteristics is not carried out by adjusting the parameters of the common mode reactors, the grounding capacitor circuit, or the interphase capacitor circuit of the EMC filter 3 but executed by the impedance circuit 10 provided in the grounding line Le connected to the grounding capacitor circuit 5. Therefore, the adjustment of attenuation characteristics of the filter can be conducted readily in a short time and at a low cost. Moreover, the adjustment of attenuation characteristics of the filter can be executed freely even after completion of the device.

In the first embodiment as described above, the adjusting capacitor Cz is connected to a place in the vicinity of the grounding point of the grounding line Le through the second grounding line Le2 arranged in a path different from that of the grounding line Le to form a single common grounding. This construction prevents a common impedance from arising between the grounding point and the pair of the magnetic core 11 and the adjusting capacitor Cz. If the adjusting capacitor Cz is connected to the grounding line Le at the ground side of the magnetic core 11 in the vicinity of the magnetic core 11 omitting the second grounding line Le2 in the ground side of the adjusting capacitor Cz, the grounding line Le becomes a common impedance for the magnetic core 11 and the adjusting capacitor Cz. This common impedance causes electric potential variation in one element due to electric current variation in the other element of the magnetic core 11 and the adjusting capacitor Cz. Unlike this situation, the first embodiment as described above avoids creation of the common impedance owing to the single common grounding, thereby hindering interaction between the grounding line Le and the second grounding line Le2.

In the description on the first embodiment, the magnetic core 11 and the adjusting capacitor Cz are connected in parallel at the side of the grounding line Le of the grounding capacitor EC. However, possible arrangement of the impedance elements relative to the grounding capacitor circuit 5 is not limited to this arrangement but other arrangements are possible. For example, as shown in Fig. 2, impedance elements z1 through z7 and the grounding capacitor EC can be arranged in a ladder configuration. The impedance elements can be an inductance element, a resistance element, and the like as well as the magnetic core 11 and the adjusting capacitor Cz. The impedance elements are combined according to requirement for adjusting the attenuation characteristics of the filter.

The second embodiment according to the present invention is described below referring to Fig. 3.

In the second embodiment, the impedance circuits are disposed in the interphase capacitor circuit 4.

In the second embodiment as shown in Fig. 3, impedance circuits Z1, Z2, and Z3 each comprising a pair of an adjusting capacitor Cz and a magnetic core 11 in series connection are connected in parallel to the respective interphase capacitors PC1, PC2, and PC3. This construction adjusts the frequency characteristics of the EMC filter 3. Other constructions are the same as those in the first embodiment of Fig. 1. The parts in Fig. 3 corresponding to the parts in Fig. 1 are given the same symbols and detailed description therefor is omitted.

The construction of the second embodiment can deal with a shift in frequency characteristics of the EMC filter 3 caused by any change of the power electronics device 2 connected to the AC power supply 1. When a change of the power electronics device 2 makes the frequency characteristics of the EMC filter 3 unfitted, a reactance component X of the magnetic core 11 and a capacitance C of the adjusting capacitor Cz of the impedance circuits Z1, Z2, and Z3, which are arranged in parallel to the interphase capacitors PC1, PC2, and PC3, are adjusted to match the frequency characteristics of the EMC filter 3 to the new power electronics device 2 without exchanging the interphase capacitors PC1, PC2, and PC3 corresponding to frequency characteristics of the new power electronics device 2.

In the second embodiment similarly to the first embodiment, adjustment of the frequency characteristics of the filter is not conducted on the parameters of the common mode reactors, the grounding capacitor circuit, or the interphase capacitor circuit of the EMC filter 3 but carried out by means of the impedance circuits Z1, Z2, and Z3 provided in parallel to the interphase capacitors PC1, PC2, and PC 3 in the interphase capacitor circuit 4. Therefore, the adjustment of the frequency characteristics of the filter is carried out readily in a short time and at a low cost. Moreover, the adjustment of frequency characteristics of the filter can be executed freely even after completion of the filter device.

Arrangement of the impedance elements relative to the interphase capacitors can be made in a ladder configuration like the arrangement as shown in Fig. 2.

The description on the first and second embodiments is made in the case of application of the present invention to an EMC filter. However, the invention is not limited to those applications but can be applied to other noise filters such as an EMI (electromagnetic interference) filter.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A noise filter for suppressing conducted emission generated in a power conversion apparatus, the noise filter (3) comprising: a grounding capacitor (5) circuit, an interphase capacitor circuit (4) , and an impedance circuit (10) for adjusting attenuation characteristic of the noise filter and connected to at least one of the grounding capacitor circuit (5) and the interphase capacitor circuit (4).

2. The noise filter according to claim 1, wherein the impedance circuit (10) is connected in series to at least one of the grounding capacitor circuit (5) and the interphase capacitor circuit (4).

3. The noise filter according to claim 1 or 2, wherein the impedance circuit (10) is connected in parallel to at least one of the grounding capacitor circuit (5) and the interphase capacitor circuit (4).

4. An EMC filter using a noise filter (3) as defined by at least one of claims 1, 2 and 3.

Fig.1

Fig.2

Fig.3

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010185450 A
- JP 2008245037 A
- JP 2007236137 A